# EUROPÄISCHE PATENTSCHRIFT

(11) **EP 0 291 890 B1**
(45) Veröffentlichungstag und Bekanntmachung des Hinweises auf die Patenterteilung: **04.05.1994**
(21) Anmeldenummer: 88107769.7
(22) Anmeldetag: 14.05.1988
(51) Int. Cl.: B65G 53/24, B65F 3/00, E03F 7/10

(54) **Entsorgungsfahrzeug**
Waste disposal vehicle
Véhicule pour l'évacuation de déchets

(30) Priorität: 17.05.1987 DE 8707099 U
(43) Veröffentlichungstag der Anmeldung: 23.11.1988
(73) Patentinhaber: UTEF - MABO, UTEF Umwelt-Technik Entsorgungs-Fahrzeuge Ges. für Entw. Konstruktionen und Patentverwertung mbH & Co, MABO KG, D-59302 Oelde (DE)
(72) Erfinder: Thüner, Udo Th., D 4740 Oelde 1 (DE)
(74) Vertreter: Strauss, Hans-Jochen, Dipl.-Phys., Dr.

(56) Entgegenhaltungen:
- DE-A- 2 531 033
- DE-A- 2 926 358
- DE-A- 2 945 517
- DE-A- 3 214 183
- DE-A- 3 517 651

## Beschreibung

Die Erfindung betrifft ein Entsorgungsfahrzeug mit Fahrgestell und Führerhaus, wobei auf dem Fahrgestell zumindest ein Aufnahmebehälter und ein Saug-/Druckaggregat angeordnet sind und der Aufnahmebehälter mit einem in diesen eingeführten Saugschlauch versehen und über eine Vakuumleitung mit dem motorgetriebenen Saug-Druckaggregat verbunden ist, wobei in die Vakuumleitung ein Abscheider eingeschaltet ist, wobei die Vakuumleitung in zwei mittels eingeschalteter Ventile unabhängig voneinander absperrbare, Abscheider enthaltende Leitungszweige aufgeteilt ist, von denen der erste als Zyklon ausgebildet für Tröpfchen oder andere fließende Stoffe und der andere als Filter abreinigbar ausgebildet für Staub oder andere rieselfähige Stoffe vorgesehen ist (DE-A-3 214 183).

Derartige Entsorgungsfahrzeuge werden eingesetzt, um flüssige oder schlammige Medien aufzusaugen und auf eine Deponie zu transportieren. Es sind Entsorgungsfahrzeuge bekannt, die -oftmals mit Bürstenwalzen versehen- staubsaugerähnlich ausgerüstet sind und mit deren Hilfe Straßenstaub oder andere rieselfähige Verschmutzungen aufgesaugt werden. Zum Aufsaugen der zu entsorgenden Medien ist eine Saugleitung vorgesehen, die -vorteilhaft mit einer zum Aufnahmebehälter radialen Achse drehbar- an einem Sauganschluß auf dem Scheitel des Aufnahmebehälters angeschlossen ist. Dabei ist ein Ausleger zum Führen der Leitung vorgesehen, so daß Aufsaugstellen in einem Umkreis um das Entsorgungsfahrzeug erreichbar sind; daneben können für den Schlauch als Leitung auch auf dem Behälterscheitel angeordnete Haspeln oder Schlauchkassetten verwendet werden, wodurch die Länge des zum Aufsaugen benutzten Schlauchendes ohne Ankuppeln von Schlauchstücken verändert werden kann. Der den Einlauf in den Aufnahmebehälter bildende Saugschlauchanschluß wird in einen Saugdom radial eingeführt und weist im Dom eine 90° Abwinklung auf, die koaxial zur Achse des Saugdomes und somit auch zur Drehachse des Anschlusses liegt. Zur Entleerung des Aufnahmebehälter sind Mittel vorgesehen, mit denen das aufgenommene Gut ausgeleitet und abgeführt werden kann.

Weiter sind Entsorgungsfahrzeuge bekannt, die in einem gewissem Umfang für rieselfähige und für flüssige Medien eingesetzt werden. Derartige Kombinationsfahrzeuge sind nur bedingt einsetzbar, wobei die Grenzen für die Einsetzbarkeit von der Art der aufzunehmenden Medien und hier wiederum nach der Gefahrgutverordnung Straße (EGVS) gegeben sind. Derartige Entsorgungsfahrzeuge sind z.B. in den DE-A 3 214 183 oder 2 926 358 beschrieben; sie sind auf einem mit Führerhaus versehenen Fahrgestell aufgebaut, auf dem zumindest ein Aufnahmebehälter und ein Saug-/Druckaggregat angeordnet ist. Der mit einem Saugschlauch versehene Aufnahmebehälter ist über zwei Leitungszweige einer Vakuumleitung mit dem Saug-/Druckaggregat verbunden, wobei diese beiden Leitungszweige voneinander unabhängig mittels Ventile absperrbar sind, und in den einen dieser Leitungszweige ein Abscheider für Staub oder andere rieselfähige Stoffe und in den anderen einer für Tröpfchen oder andere fließfähigen Stoffe eingeschaltet ist.

Um Staub und andere rieselfähige Güter wirksam abzuscheiden, sind in dem einen Zweig der geteilten Vakuumleitung als robuster Abscheider filternde Abscheider eingesetzt; der in ihnen abgeschiedene Staub wird periodisch oder je nach Anstieg der Druckdifferenz beim Erreichen eines vorwählbaren Grenzwertes durch Druckluftimpulse abgereinigt. Die Abscheidung von Tröpfchen erfolgt dagegen in einem Massenkraftabscheider, z.B. einem Zyklon, der ein leichtes Abfließen auch (relativ) schwerflüssiger Breie gestattet. Die Austragsorgane müssen dabei vakummdicht ausgeführt sein, wobei Doppelpendelklappen oder Rotorschleusen in entsprechender Ausbildung angewandt werden sollten. Diese beiden Abscheider sind durch die in der vom Vakuumdom ausgehenden Vakuumleitung angeordnete Verzweigung mit in den Leitungszweigen vorgesehenen Ventilen unabhängig voneinander schaltbar. So läßt sich mit einem motorisch etwa vom Antriebsmotor des Fahrzeugs oder von einem Hilfsmotor angetriebenen, z.B. als Schrauben- oder Roots-Kompressor ausgeführten Saug-/Druckaggregat, der als Vakuumkessel ausgebildete Aufnahmebehälter evakuieren und die Absaugung je nach Bedarf bei staubigen Gütern über den Staub-Abscheider und bei fließenden Gütern über den Tröpfchen-Abscheider führen.

Diese Aufteilung des Abscheiders in zwei getrennt schaltbare Einzelabscheider erlaubt ein Beschicken des Aufnahmebehälters sowohl mit trockenen als auch mit flüssigen Medien. Weiter ist bekannt, einen Dom zum Anschluß des Saugschlauches vorzusehen und diesen Anschluß volldrehbar auf dem Scheitel des Aufnahmebehälters auszubilden. Dabei werden weder das Problem einer weiteren Verwendung der bei der Absaugung anfallenden Luft, die aus dem Saug-/Druckaggregat austritt, gelöst, noch die bei Naßabscheidung störende Schaumbildung, die in der Entsorgungstechnik auftretend zu Problemen bei der Absaugung nasser Medien führt.

Hieraus ergibt sich das der Erfindung zugrunde liegende technische Problem, nach dem ein Entsorgungsfahrzeug so weitergebildet werden soll, daß Aufnahme und Abgabe sowohl staubiger und rieselfähiger, als auch flüssiger und schlammiger Medien möglich ist, ohne Rücksicht auf deren Art oder Zusammensetzung, daß der Wechsel zwischen trockenen und nassen Medien problemlos vollzogen werden soll, und daß schließlich das Entsorgungsfahrzeug einfach und sicher zu handhaben und wirtschaftlich herzustellen ist.

Diese Aufgabe wird nach der Erfindung gelöst durch das Kennzeichen des Hauptanspruchs, wobei Weiterbildungen und bevorzugte Ausführungsformen in den Unteransprüchen beschrieben sind.

Vorteilhaft ist das Saug-/Druckaggregat mit einer Ausblasleitung versehen, über die geförderte Luft rückführbar ist, wobei der Aufnahmebehälter mit pneumatischen Mitteln zum Ausleiten und Abführen der aufgesaugten Medien und mit Mitteln zum Einführen von Additiven in den Aufnahmebehälter versehen ist, und sowohl zum Ausleiten und Abführen der aufgesaugten Medien als auch zum Einführen dieser Additive die zurückgeführte Luft einsetzbar ist. Dabei wird die rückgeführte Luft vorteilhaft auch eingesetzt, um den pneumatischen Abtransport der aufgesaugten Medien zu bewerkstelligen.

Um die in die Vakuumleitung eingeschalteten Abscheider zu entlasten, ist es vorteilhaft, vor dem Vakuumdom einen Trägheitsabscheider vorzusehen, der zweckmäßigerweise aus überlappend ausgebildeten Prallblechen oder sich teilweise überlappenden Umlenklamellen gebildet ist. Diese Vorabscheidung im Behälter selbst hält einen großen Teil des vom Absaugeluftstrom mitgerissenen Teilchen der aufgesaugten Medien zurück, das direkt im Aufnahmebehälter verbleibend keine Sekundärprobleme aufkommen läßt. Dabei ist es vorteilhaft, wenn der Aufnahmebehälter im Bereich des Saugleitungseintrittes bzw. des Eintrittsdomes mit eine Kegelbildung unterbindenden, als im Einströmbereich angeordnete Leit- bzw. Prallbleche ausgebildete Mittel versehen ist. Durch einen derartigen Vorabscheider kann auch die durch die Einleitung aus der Saugleitung bei einigen Medien, die nicht hinreichend fließfähig sind, bekannte Bildung eines Kegels unter dem Einlauf durch Anordnung entsprechender, eine Kegelbildung unterbindender Mittel wie Leit- bzw. Prallbleche, aber auch im Bodenbereich vorgesehene Bodenbelüftung oder entsprechender Vibratoren unterbunden werden, was den Vorteil einer gleichmäßige Füllung des Aufnahmebehälters mit sich bringt.

In einer vorteilhaften Weiterbildung ist im Scheitel der Abwinklung eine leicht austauschbare Verschleißplatte oder -halbschale mit harter oder weicher Oberfläche oder aber mit einer vom aufzunehmenden Medium während des Absaugens gebildeter Oberfläche eingesetzt. Letztere ist besonders interessant, wenn leicht backende oder schlammige Medien aufgesaugt werden. Hier formt die Strömung die Kontur der verschleißfesten Oberfläche, die -da immer wieder von dem Medium aufgefüllt- diese Kontur behält.

Die Verlängerung des Tauchrohres des Zyklons durch ein Siebrohr bis nahe an den Austrag für das Abgeschiedene sichert gegen mitgerissene, leicht fliegende Teilchen, die nicht in das Saug-/ Druckaggregat gelangen dürfen. Gleichzeitig gestattet das so verlängerte Tauchrohr die Anordnung eines Schwimmkörpers mit einem Dichtkegel bzw. einer Dichtkugel, die beim störungsbedingten Ansteigen des Flüssigkeitsstandes im Zyklon das Tauchrohr schließt, so daß ein Überströmen der Flüssigkeit in das Saug-/Druckaggregat verhindert wird. Vorteilhaft ist dabei in dem Tauchrohr des Zyklons ein Schwimmerventil vorgesehen, mit einem oberen Dichtkegel bzw. einer unteren Dichtkugel, einem, in den Austragsbehälter des Zyklons reichenden Schwimmkörper und einem im Bereich des Überganges zum Siebrohr angeordneten, mit dem Dichtkegel bzw. der Dichtkugel zusammenwirkenden Dichtsitz. Zur Unterdrückung von in vielen Fällen nicht zu vermeidenden Schaum ist ein dem Zyklon nachgeschaltetes Sicherheitsfilter mit einem Antischaum-Mittel als Schaumbremse ausgerüstet ist. Bei besonders starker Schaumentwicklung ist es vorteilhaft, zumindest in dem den Zyklon enthaltenden Zweig der Vakuumleitung, diesem nachgeschaltet, ein Sicherheitsfilter einzuschalten, wobei dieses Filter vorteilhaft mit einem Antischaummittel ausgerüstet ist. Zum Bremsen eines Schaumes genügt es im allgemeinen, ein mit einem bekannten, schwer löslichen Antischaummittel beschichtetes Netz oder Gitter zu verwenden. Zweckmäßig ist es weiter, den Zyklon mit Spülvorrichtungen zu versehen, die die inneren Oberflächen von haftenden Belägen frei spülen können.

In einer vorteilhaften Weiterbildung ist der Aufnahmebehälter im Bereich des Saugleitungseintrittes bzw. des Eintrittsdomes mit eine Kegelbildung unterbindenden Mitteln versehen, die als im Bodenbereich vorgesehene Bodenbelüftung oder als Vibratoren ausgebildet sind. Mit dieser Bodenbelüftung wird eine weitgehend gleichmäßige Verteilung des aufgenommenen Gutes über die Grundfläche des zur Aufnahme dieses Gutes vorgesehenen Teils des Aufnahmebehälters erreicht.

Zum Entleeren des Aufnahmebehälters wird vorteilhaft ein Entleerungsdom mit Ableitanschluß vorgesehen, der in der hinteren Behälterrückwand angeordnet ist. Selbst wenn der Aufnahmebehälter mit einem öffenbaren Deckel versehen ist, gestattet der Entleerungsdom mit seiner Anschlußmöglichkeit für eine abführende Leitung das Ableiten des aufgenommenen Gutes über einen Schlauch, was im Hinblick auf die unterschiedlichen Gefahrenklassen der entsorgten Medien eine Notwendigkeit ist. Als Mittel zum Ausleiten und Abführen des aufgenommenen Gutes ist vorteilhaft der Entleerungsdom an der hintere Stirnseite des Aufnahmebehälters in tiefster Stellung angeordnet und mit einem Entleerungsstutzen versehen, wobei der Entleerungsstutzen mit einem Schieber absperrbar ist, und daß der Boden des Aufnahmebehälters zumindest im Bereich des Entleerungsdomes eine das aufgenommene Gut fluidisierende Belüftungseinrichtung aufweist, die über eine Druckleitung an die Druckseite des Saug-/Druckaggregates anschließbar ist. Damit wird ein geschlossenes Entleeren des Aufnahmebehälters über eine anschließbare Rohrleitung und somit ohne Beeinträchtigung der Umwelt ermöglicht.

Um die Entleerung ungestört durchführen zu können, ist es weiter zweckmäßig, das Medium im Bereich des Entleerungsdeckels bzw. des Entleerungsdomes durch Einleiten von Druckluft zu fluidisieren und so leichter förderbar zu machen. Dies ist besonders dann wichtig, wenn eine pneumatische Förderleitung an den Entleerungsdom angeschlossen wird, durch die die Entleerung erfolgt. Besonders bei der Anwendung einer Pfropfenförderung (für die je nach Länge der Förderleitung auch noch im Zuge der Förderleitung zusätzliche Belüftungsglieder vorgesehen werden können) bildet die Fluidisierung die Voraussetzung für ein ungestörtes Einleiten des Mediums in die Förderorgane. Dabei wird die im Zuge der pneumatischen Förderleitung eingeführte Luft vorteilhafterweise vom Boden der Förderleitung aus eingeführt, wobei die Einführungsstutzen in den Leitungsboden münden, oder im Leitungsboden ein Verteilstück (Siebblech, Drahtgewebe o.dgl.) vorgesehen ist, durch das die Zusatzluft eingeführt wird. Um eine pneumatische Entleerung zu ermöglichen, sind der Entleerungsdom als Anschlußstutzen für eine als pneumatische Förderleitung ausgebildete Entleerungsleitung und die über die Druckleitung mit dem Saug-/Druckaggregat verbundene Belüftungseinrichtung als Sendestation für diese pneumatische Fördereinrichtung ausgebildet. Vorteilhaft wird dazu der Entleerungsdom in eine Druckkammer und eine Wirbelkammer unterteilt, wobei die Druckkammer mit der Druckluftquelle und die Wirbelkammer mit der Ableitung in die Förderorgane verbunden sind. Diese Unterteilung geschieht durch eine Platte, die mindestens eine Luftdurchtrittsöffnung aufweist, wobei einmal die Luftdurchtrittsöffnung als Rohrbogen ausgebildet ist, der -gegebenenfalls mit einer Injektionsdüse- bis an der Eintrittsquerschnitt des Ableitungsstutzens geführt ist, und der so in Art einer Sendestation die Möglichkeit bietet, eine pneumatische Förderleitung anzuschließen. Die Platte kann selbstverständlich auch eine Vielzahl von Luftüberströmöffnungen aufweisen, etwa in Form eines Lochbleches oder eines Siebgewebes, das die Überströmöffnung in der Platte verdeckt. Durch die einströmende Druckluft wird das in den Entleerungsdom gelangende Gut aufgelockert und durch den über den Entleerungsstutzen in die Entleerungsleitung abströmende Luft fluidisiert mitgenommen. Diese Platte ist austauschbar, wobei Schnellverschlüsse, etwa über den Umfang verteilte Bajonettstifte, die in am Grundkörper vorgesehene Nasen einführbar, dort festsetzbar und mit einem Exzenterhebel anspannbar sind, ein leichtes Wechseln und ein paßgenaues Einsetzen erleichtern sowie ein dichtes Anziehen an die umlaufende Dichtung erlauben. Die eingesetzte Platte ist vorteilhaft mit einer umlaufenden Dichtung aus einem elastischen Material versehen. Vorteilhaft ist die die Überströmöffnung als in die Platte eingesetzter Rohrbogen ausgebildet ist, dessen Austrittsachse in die Öffnung der Förderleitung weist, wobei -in einer weiteren Ausführungsform- das offene Ende des Rohrbogens mit einer bis in den Eintrittsquerschnitt der Förderleitung reichenden Injektordüse versehen ist.

Es versteht sich von selbst, daß in bestimmten Bedarfsfällen -etwa beim Aufsaugen schlammiger oder flüssiger Medien, um deren Eindringen in die Druckkammer zu vermeiden- die Platte auch als geschlossene Platte ausgebildet ist und im Entleerungsdom gegenüber der Druckkammer abschließt. Der Ableitungsstutzen selbst ist mit einem innen angeordneten Flachschieber verschließbar, der von außen betätigt werden kann. Die Förderorgane sind -sofern das Gut nicht als rieselfähiges Gut ausfließt- Druckluftinjektoren und Druckerhöhungsstationen in der pneumatischen Förderleitung, wobei der Injektor zweckmäßig am Austrittsende angeordnet ist und im Zuge der Förderleitung Druckerhöhungsstationen, wie sie bei der Druckförderung üblich sind. Durchfluß und Druck der zum Fluidisieren des zu fördernden Stoffes anstehenden Druckluft wird durch Meßgeräte überwacht.

Für besondere Anwendungsfälle ist es notwendig, das entsorgte Medium im Aufnahmebehälter bereits mit Zusatzstoffen zu versehen, es chemisch zu behandeln. Zu diesem Zweck ist an dem Entsorgungsfahrzeug eine Vorratskammer vorgesehen, die als ein mit der Druckseite des Saug-/Druckaggregates über eine Leitung verbundener Zusatzmittelbehälter ausgebildet ist, aus dem über eine druckregulierte Förderpumpe oder mit von dem Saug-/Druckaggregat gelieferter Druckluft das Zusatzmittel entnommen und über ein Verteilsystem in den Aufnahmebehälter eingeblasen wird. Die Mittel zum Einleiten eines Additivs in den Aufnahmebehälter sind vorteilhaft gebildet von einem an die Auslaßleitung des Saug-/Druckaggregates über eine Druckleitung mit Absperrventil angeschlossenen, in dem Aufnahmebehälter angeordneten Verteilsystem, wobei diesem Verteilsystem ein mit der Auslaßleitung verbundener Zusatzmittelbehälter vorgeschaltet ist; vorteilhaft ist das Verteilsystem gebildet von einer in dem Aufnahmebehälter vorgesehen Verteilleitung mit mindestens einem Ausblas. Die dazu benutzte Luft wird im Kreislauf gefahren; das Einblasen geschieht zweckmäßigerweise über Fluide im Zusatzbehälter oder durch einen entsprechend ausgebildeten Injektor.

Ein Vakuum-/Druck-Meßgerät in der Vakuumleitung vor den Abscheidern gestattet die Überwachung des Unterdruckes; es versteht sich von selbst, daß dieses Vakuum-/Druck-Meßgerät auch am Aufnahmebehälter selbst angeordnet sein kann. In Abhängigkeit von dem vorgegebenen Druck steht dieses Vakuum-/Druck-Meßgerät mit die Drehzahl des Antriebsmotors des Saug-/Druckaggregates beeinflussenden Mitteln in Verbindung. Als Vakuum-/Druck-Meßgerät kommt ein sowohl Vakuum als auch Überdruck messendes Instrument in Frage, da beim Saugbetrieb der Aufnahmebehälter unter Vakuum und beim Entleeren unter Überdruck steht; dabei ist es vorteilhaft, wenn das Vakuum-/Druck-Meßgerät mit Grenzkontakten vorgesehen ist, die mit einem die Drehzahl des Antriebsmotors des Saug-/Druckaggregates beeinflussenden Regler zusammenwirken. Dabei wird zur Schonung der Umwelt über die Dämpfung von Geräuschen vorteilhaft sowohl dem Ansaug als auch dem Ausblas des Saug-/Druckaggregates je ein Schalldämpfer vorgeschaltet.

In einer Weiterbildung ist der Aufnahmeraum des Aufnahmebehälter mit einer Füllstandskontrolle versehen. Diese Füllstandskontrolle kann erfolgen über die Massebestimmung, wobei die vom Aufnahmebehälter aufgenommene Masse über das spezifische Volumen eine Abschätzung der Füllstandshöhe erlaubt. Zur Massebestimmung wird der Aufnahmebehälter auf mechanisch-elektrischen Wandlern gelagert bzw. an solche Wandler angehängt, die die Auflagekraft bzw. die anhängende Kraft des Aufnahmebehälter, ausgeübt durch dessen Masse, in ein elektrisches Signal umformen und zur Anzeige bringen. Eine Elektronik, versehen mit der Information über das spezifische Volumen, kann diese Masse direkt in Füllhöhe ausdrücken. Weiter ist eine Füllstandskontrolle mit Lichtschranken möglich, wobei die Lichtschranken vorteilhaft quer zum Aufnahmebehälter in unterschiedlichen Höhen angeordnet sind. Eine im Behälter angeordnete Gamma-Strahlungsquelle erlaubt über die Schwächung der Gamma-Strahlung ebenfalls eine Aussage über die Füllhöhe, wobei der Detektor ein auf Gamma-Strahlung ansprechender Empfänger ist. Wegen der unterschiedlichen Absorptionskoeffizienten der unterschiedlichen Medien für Gamma-Strahlung ist hier eine Auswerte-Elektronik vorteilhaft, die diese Unterschiede berücksichtigt, und aus der Massenüberdeckung der Strahlungsquelle, unter Berücksichtigung des spezifischen Volumens die Füllhöhe auswirft. Schließlich kann zur Füllstandkontrolle ein Ultraschallgeber vorgesehen sein, der Ultraschallstrahlung gerichtet abgibt, die in Reflexion von einem Ultraschallempfänger aufgenommen wird, wobei die Reflexion ein Maß für die erreichte Füllhöhe darstellt.

Das Ausrüsten des Aufnahmebehälter mit einem Anschlußstutzen zum Anschließen von Hilfsaggregaten erlaubt im Notfall ein schnelles Eingreifen der Bedienungsmannschaft, ohne daß zusätzliche Verbindungen z.B. für Preßluft oder Vakuum hergestellt werden müssen. So können Arbeitsgeräte, wie Handsauger, Hebe- und Dichtkissen (auch zum provisorischen Abdichten von Behälterstutzen, Kanälen, Rohrleitungen o.dgl.) sowie Werkzeuge zum Bürsten, zum Lösen, zum Öffnen ohne weiteres angesetzt werden.

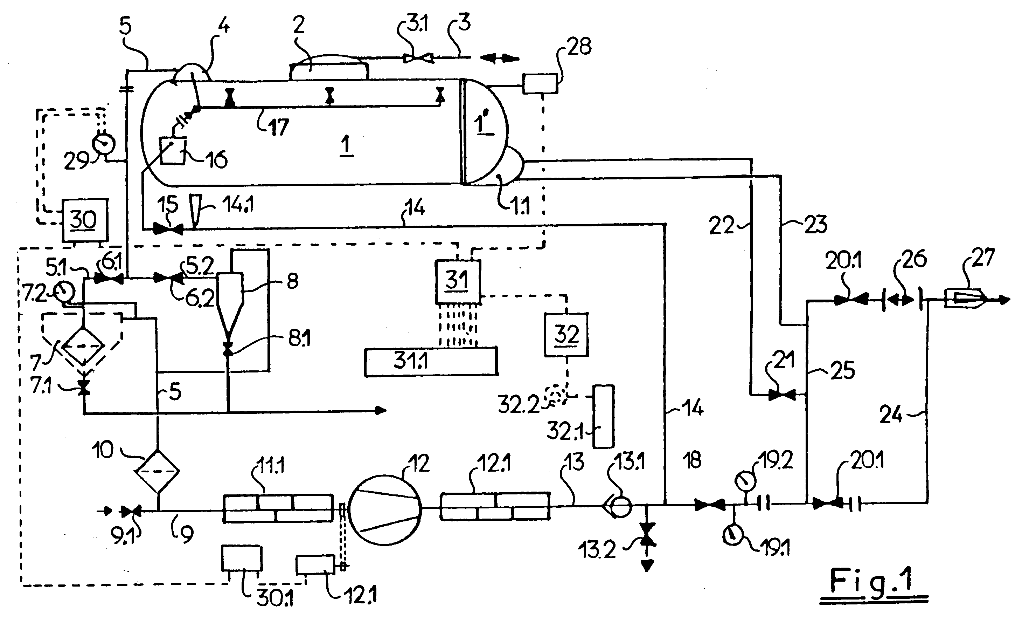

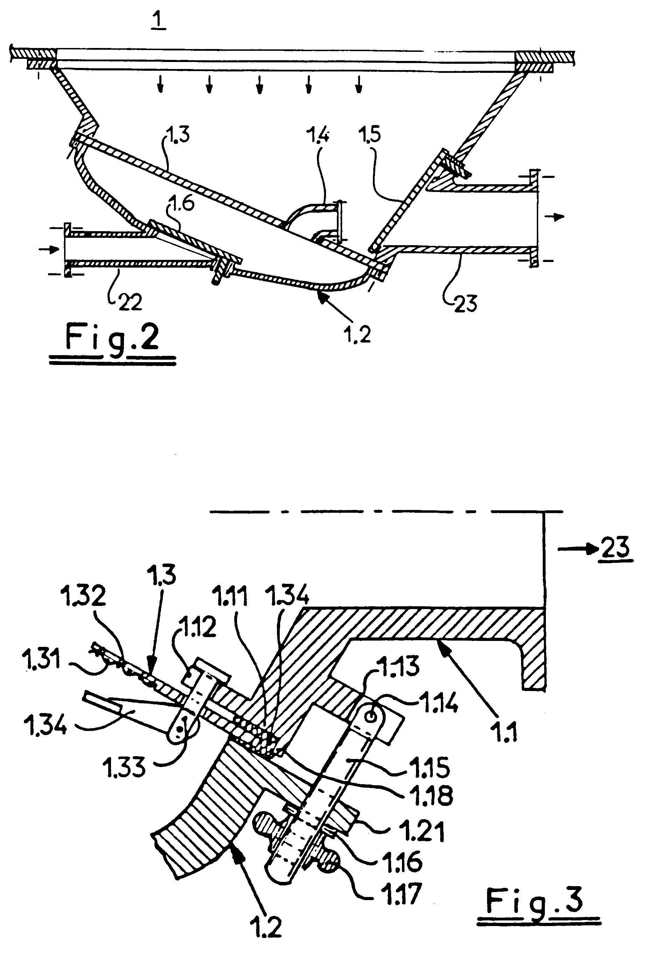

Das Wesen der Erfindung wird anhand der Figuren 1 und 2 beispielhaft näher erläutert; dabei zeigen
- Fig. 1: ein (schematisches) Strichdiagramm des Aufbaus von Aufnahmebehälter mit Nebenaggregaten (Schaltschema);
- Fig. 2: eine (schematische) Darstellung des Entleerungsdomes;
- Fig. 3: eine (schematische) Schnittdarstellung des Schnellverschlusses und der eingesetzten Platte.

Die Fig. 1 zeigt den Entleerungsbehälter 1 mit dem öffenbaren Deckel 1′ , an dem im Bereich des unteren Scheitel der Entleerungsdom 1.1 vorgesehen ist. Das zu entsorgende Gut wird über den Fülldom 2 eingeführt, an den die Saugleitung 3 angeschlossen ist. Zweckmäßigerweise wird bei der Einmündung der Saugleitung 3 in den Fülldom 2 ein als Klappe ausgebildeter Schieber eingefügt. Um das aufzunehmende Gut über die Saugleitung 3 in den Aufnahmebehälter 1 transportieren zu können, wird der Behälter über den Saugdom 4 und die Vakuumleitung 5 mittels eines Vakuumaggregats 12, angetrieben von einem Antriebsmotor 12.1 entlüftet und unter Vakuum gesetzt. Ein Kontrollmanometer 29 überwacht das Vakuum, wobei sowohl für den Saug- als auch für den (zur Entleerung u.u. notwendigen) Druckbetrieb maximal und minimal Begrenzungen vorgesehen sind. Die Maximalkontakte aktivieren jeweils einen im Schaltkasten 30 vorgesehenen Umschalter, der die Drehzahl des Antriebsaggregats 12.1 für die Vakuumpumpe 12 über eine Schalteinrichtung 30.1 auf einen vorgegebenen Wert reduziert. Wird die Minimumgrenze am Kontaktmanometer erreicht, wird die Drehzahl wieder auf den ursprünglichen Wert hochgenommen. Durch Wahl der Drehzahlen läßt sich ein wesentlich ruhigerer Betrieb erreichen, als durch die übliche Regelung, wobei das Aggregat entweder mit voller Drehzahl oder stillgesetzt (bzw. mit Leerlaufdrehzahl bei Verbrennungsmotoren) arbeitet. Die zur Förderung über die Leitung 5 abgesaugte Luft enthält je nach Fördergut staubförmige oder tropfenförmige Bestandteile. Um einen störungsfreien Betrieb des Vakuumaggregats 12 zu ermöglichen, müssen diese Bestandteile vorher abgeschieden werden. Dazu wird bei staubförmigen Gütern das Ventil 6.1 geöffnet, bei schlammigen und flüssigen Gütern das Ventil 6.2. Bei staubförmigen Gütern wird der abgesaugte Luftstrom über einen filternden Abscheider 7 geleitet, wobei im Zuge der Vakuumleitung 5 zum filternden Abscheider ein Sicherheitsfilter 10 nachgeschaltet ist. Da sich in dem filternden Abscheider der Staub ansammelt, muß von dieser von Zeit zu Zeit gereinigt werden. Dies geschieht durch Rütteln oder durch Druckluftimpulse, wobei die Abreinigung entweder über ein Zeitglied oder über ein Druckdifferenz-Meßgerät 7.2 ausgelöst wird. Das abgeschiedene und durch die Abreinigung im Bunker des filternden Abscheiders 7 gesammelte Gut kann über das Ventil 7.1 abgezogen werden.

Beim Betrieb mit schlammigen und flüssigen Stoffen würde der filternde Abscheider versagen, daher wird durch Öffnung des Ventils 6.2 ein Massenkraftabscheider 8 in Form eines einfachen oder eines Multizyklons eingesetzt. Die Reinluft verläßt den Zyklon über das Tauchrohr, fließt - wiederum zusammengefaßt in der Vakuumleitung 5 über das Sicherheitsfilter 10 zum Vakuumaggregat 12. Das im Konus des Zyklons sich ansammelnde flüssige oder schlammige Gut wird über das Ventil 8.1 in die Abzugsleitung gelassen.

Zur Dämpfung der Geräuschbelästigung ist dem Vakuum/Druckaggregat jeweils ein Schalldämpfer 11.1 vor- und ein Schalldämpfer 12.1 nachgeschaltet. Die vom Vakuum/Druckaggregat 12 komprimierte Saugluft wird über das Ventil 13.2 abgelassen. Ein Teil der Luft kann über die Leitung 14 abgezweigt werden, um aus einem Vorratsbehälter 16 Additive über die Leitung 17 in den Behälter einzuspeisen. Diese Additive können Chemikalien sein, die unerwünschte Eigenschaften des abgesaugten Gutes kompensieren. So kann durch Zugabe z.B. von Kalk einem Säureangriff entgegengewirkt werden. Bei feuergefährlichen Stäuben kann durch Einblasen von inertem Staub die Brandgefahr herabgesetzt werden.

Für das Entleeren des Behälters wird der Saugbetrieb unterbrochen und atmosphärische Luft über das Ventil 9.1, die Leitung 9 und den Schalldämpfer 11.1 vom Vakuum/Druckaggregat 12 angesaugt und über den Schalldämpfer 12.1 in das Leitungssystem entlassen, wobei das Ventil 13.2 geschlossen ist. Die Druckluft wird über die Leitung 14 dem Behälter 1,gegebenenfalls unter Zusetzen von Additiven aus dem Behälter 16 zugeführt, wobei eine Verteilerleitung 17 mit einer Reihe von Einspeisventilen vorgesehen ist. Ein Sicherheitsventil 14.1 verhindert ein Überfüllen des Behälters. Mit Hilfe des sich im Behälter 1 aufbauenden Druckes kann über den Entleerungsdom 1.2 das im Behälter vorhandene Gut über die Entleerungsleitung 23 entfernt werden. Hilfreich ist ein im Zuge der Entleerungsleitung 23 angeorndeter Injektor 27, der ebenfalls aus dem Druckluftvorrat über die Ventile 18 und 20.1 gespeist wird. Um die Leitung 23 ordnungsgemäß beschicken zu können, wird über die Leitung 22 ein Preßluft-Teilstrom in den Entleerungsdom 1.1 geleitet, der dort durch Fluidisierung das Einleiten der Förderung erleichtert. Diese Fluidisierungsluft ist über das Ventil 21 absperrbar. Gleichfalls kann, um die ungestörte pneumatische Förderung in der Leitung 23 aufrecht zu erhalten, über eine Hilfsleitung 25 in die Leitung 23 Preßluft eingespeist werden, wie bei pneumatischer Druckförderung üblich. Durchfluß und Druck dieser zur Förderung eingesetzten Preßluft kann über die Instrumente 19.1, einem Düsen- oder Blendendurchflußmeßgerät bzw. 19.2, einem Manometer überwacht werden.

Es ist vorteilhaft im Zuge der Saugleitung 3 oder der Entleerungsleitung 23 eine Benetzungsstrecke vorzusehen, in der das geförderte Gut - im allgemeinen staub- oder rieselfähig - mit einer Benetzungsflüssigkeit benetzt werden kann, wobei der Benetzungsgrad bis hin zum schlammförmigen Zustand einstellbar ist. Als Benetzungsflüssigkeit dient in aller Regel Wasser aus einem Hydranten oder aus einem besonderen Vorratsbehälter mit Entnahmepumpe. Andere Benetzungsflüssigkeiten können selbstverständlich eingesetzt werden, so z.B. Sohlen etwa um bestimmten Korrosionswirkungen vorzubeugen und korrusive Substanzen zu puffern oder aber Mineralöle, etwa um den Brennwert zur Verbrennung gelangenden Entsorgungsstoffen zu erhöhen.

Die elektrische Steuerung ist in einem Hauptschaltkasten 31 zusammengefaßt, der mit allen Einrichtung und Verdrahtungen für Zwangs-, Einzel- und Kontrollschaltungen versehen ist. Die Bedienung des Fahrzeugs erfolgt über ein Schaltpult 31.1 und einen Fernschalter 32 bzs. 32.1, wobei der Fernschalter 32.1 über ein Kabel, aufgerollt in einer Rolle 32.2, mit dem Fernschalter 32 verbunden dem Bedienungsmann freie Bewegung im Bereich des Fahrzeugs erlaubt. Eine Füllstandsüberwachung 28, verbunden mit dem Hauptschaltkasten sorgt für ein rechtzeitiges Abschalten, wenn maximaler Füllstand erreicht ist.

Fig. 2 zeigt den an den Behälter 1 anflanschbaren Entleerungsdom 1.1, dargestellt als unter den Behälter flanschbarer Entleerungsdom, wobei das im Behälter befindliche Gut frei in den Entleerungsdom eintreten kann, unterstützt vom im Behälter 1 (Fig. 1) herrschenden Druck. Es versteht sich von selbst, daß der Entleerungsdom auch anstelle eines Entleerungsstutzens auf den öffenbaren Deckel 1.1 des Behälters 1 - wie in Fig. 1 schematisch dargestellt - angeflanscht werden kann, wichtig ist jedoch, daß der Entleerungsdom immer im tiefen Bereich des Behälters angeordnet ist. Der Entleerungsdom 1.1 ist zweiteilig ausgebildet und wird von einer schräg liegenden Platte 1.3 in eine Druckammer 1.2, an die die Druckluftleitung 22 angeschlossen ist und eine Wirbelkammer, an die die Förderleitung 23 angeschlossen ist unterteilt. Die Druckluftleitung 22 ist mit einem Schieber 1.6 verschließbar; durch diesen Verschluß wird ein unerwünschtes Eindringen abgeschiedenen Gutes in die Druckluftleitung 22 vermieden. Die Förderleitung 23 kann ebenfalls mit einem Schieber 1.5 verschlossen werden. In der Platte 1.3 ist mindestens eine Überströmöffnung, durch die die Druckluft aus der Druckkammer in die Wirbelkammer strömen kann. Diese Überströmöffnung ist in der Darstellung der Fig. 2 mit einem gekrümmten Rohrstück versehen, dessen Austrittsrichtung in die Förderleitung 23 weist. Es versteht sich von selbst, daß das gekrümmte Rohrstück injektordüsenartig verlängert bis zum Eintrittsquerschnitt an die Förderleitung 23 geführt sein kann. Es versteht sich weiter als selbstverständlich, daß die Platte 1.3 teilweise oder ganz als Überströmöffnung ausgebildet ist und mit einem Lochblech oder mit einem Siebgewebe versehen ein gezieltes großflächiges Überströmen der Druckluft aus der Druckammer in die Wirbelkammer erlaubt.

Die Fig. 3 zeigt eine Einzelheit der Schnellbefestigung der in den Entleerungsdom eingefügten Platte 1.3 (die in der Darstellung mit einem mit einem Siebgewebe 1.31 hinterlegten Lochblechteil 1.32 versehen ist). Der Rand 1.33 der Platte 1.3 ist mit einer umlaufenden Dichtung 1.34 versehen, die zwischen den Flanschen 1.21 des Druckkammerdeckels 1.2 und 1.11 des Grundkörpers 1.1 des Entleerungsdomes gehalten ist. Der Druckkammerdeckel 1.2 wird dabei am Grundkörper 1.1 mittels einer an einen Vorsprung 1.3 am Grundkörper 1.1 angelenkten Schwenkschraube 1.5 befestigt, wobei die Schwenkschraube um den Bolzen 1.14 in der Nase 1.13 des Grundkörpers 1.1 drehbar ist und an ihrem freien Ende eine Knebelschraube 1.17 mit Unterlegscheibe 1.16 trägt. Die umlaufende Dichtung 1.34 der eingelegten Scheibe 1.3 preßt sich dabei zwischen die beiden Flanschen, wobei eine vorstehende Nase 1.18 das Herausquetschen der Dichtung verhindert. Eine nach innen gerichtete Nase 1.12 verlängert den Flansch 1.11 des Grundkörpers 1.1 nach innen; diese Nase ist gabelförmig geöffnet und erlaubt das Einführen eines Führungs- und Paßstiftes 1.33, der durch die Platte 1.3 beweglich geführt ist. Ein Exzenterhebel 1.34 spannt die Platte gegenüber der Nase 1.12 und damit gegenüber dem Grundteil 1.1 an. Zum Auswechseln der Platte genügt ist die über den Umfang verteilten Knebelschrauben zu lösen, mehrere über den Umfang verteilte Exzenterhebel zu entspannen und die Scheibe auszuwechseln.

## Patentansprüche

1. Entsorgungsfahrzeug mit Fahrgestell und Führerhaus, wobei auf dem Fahrgestell zumindest ein Aufnahmebehälter (1) und ein Saug-/Druck-Aggregat (12) angeordnet sind und der Aufnahmebehälter (1) mit einem in diesen eingeführten Saugschlauch (3) versehen und über eine Vakuumleitung (5) mit dem motorgetriebenen Saug-Druck-Aggregat (12) verbunden ist, wobei in die Vakuumleitung (5) ein Abscheider eingeschaltet ist, wobei die Vakuumleitung in zwei mittels eingeschalteter Ventile unabhängig voneinander mittels Ventile absperrbare, Abscheider enthaltende Leitungszweige aufgeteilt ist, von denen der erste als Zyklon (8) ausgebildet für Tröpfchen oder andere fließende Stoffe und der andere als Filter (7) abreinigbar ausgebildet für Staub oder andere rieselfähige Stoffe vorgesehen ist, **dadurch gekennzeichnet**, daß das Saug-/Druck-Aggregat (12) mit einer Ausblasleitung versehen ist, über die geförderte Luft rückführbar ist, wobei der Aufnahmebehälter (1) pneumatische Mittel zum Ausleiten und Abführen der aufgesaugten Medien und Mittel zum Einführen von Additiven in den Aufnahmebehälter (1) aufweist, wobei sowohl zum Ausleiten und Abführen der aufgesaugten Medien als auch zum Einführen dieser Additive die zurückgeführte Luft einsetzbar ist.

2. Entsorgungsfahrzeug nach Anspruch 1, **dadurch gekennzeichnet**, daß der über einen Dom (2) in den Aufnahmebehälter (1) eingeführte Saugschlauch (3) eine 90° Abwinklung aufweist, die im wesentlichen koaxial zur Achse des Domes (2) ausgerichtet ist und in deren Scheitel ein Verschleißschutz, vorzugsweise in Form einer leicht austauschbaren Verschleißplatte bzw. Verschleißhalbschale angeordnet ist.

3. Entsorgungsfahrzeug nach Anspruch 2, **dadurch gekennzeichnet**, daß die Verschleißplatte bzw. -halbschale als im wesentlichen unter 45° zur Einströmrichtung angestellt und mit verschleißfester Oberfläche versehen ist.

4. Entsorgungsfahrzeug nach Anspruch 2, **dadurch gekennzeichnet**, daß der Verschleißschutz als im wesentlichen unter 45° zur Einströmrichtung angestellte, nach vorn offene Kammer ausgebildet ist, wobei im Hohlraum der Kammer abgesaugtes Material einlagerbar ist.

5. Entsorgungsfahrzeug nach einem der Ansprüche 1 bis 4, **dadurch gekennzeichnet**, daß der Aufnahmebehälter (1) im Bereich des Saugleitungseintritts bzw. des Eintrittsdomes (2) mit eine Kegelbildung unterbindenden, als im Einströmbereich angeordnete Leit- bzw. Prallbleche ausgebildete Mittel versehen ist.

6. Entsorgungsfahrzeug nach einem der Ansprüche 1 bis 4, **dadurch gekennzeichnet**, daß der Aufnahmebehälter (1) im Bereich des Saugleitungseintritts bzw. des Eintrittsdomes (2) mit eine Kegelbildung unterbindenden Mitteln versehen ist, die als im Bodenbereich vorgesehene Bodenbelüftung oder als Vibratoren ausgebildet sind.

7. Entsorgungsfahrzeug nach einem der Ansprüche 1 bis 6, **dadurch gekennzeichnet**, daß das Tauchrohr des als Tröpfchenabscheider ausgebildeten Zyklons (8) mit einem Siebrohr verlängert, bis nahe an den Staubaustrag geführt ist.

8. Entsorgungsfahrzeug nach Anspruch 7, **dadurch gekennzeichnet**, daß in dem Tauchrohr des Zyklons (8) ein Schwimmerventil vorgesehen ist, mit einem oberen Dichtkegel bzw. einer unteren Dichtkugel, einem, in den Austragsbehälter des Zyklons (8) reichenden Schwimmkörper und einem im Bereich des Überganges zum Siebrohr angeordneten, mit dem Dichtkegel bzw. der Dichtkugel zusammenwirkenden Dichtsitz.

9. Entsorgungsfahrzeug nach Anspruch 7 oder 8, **dadurch gekennzeichnet**, daß ein dem Zyklon (8) nachgeschaltetes Sicherheitsfilter (10) mit einem Antischaum-Mittel als Schaumbremse ausgerüstet ist.

10. Entsorgungsfahrzeug nach einem der Ansprüche 1 bis 9, **dadurch gekennzeichnet**, daß der Zyklon (8) mit einer Spülvorrichtung versehen ist.

11. Entsorgungsfahrzeug nach einem der Ansprüche 1 bis 10, **dadurch gekennzeichnet**, daß im Bereich des Vakuumdomes ein die Vakuumleitung (5) schützender und die im Zuge der Vakuumleitung (5) angeordnete Abscheider (7; 8) entlastender Vorabscheider vorgesehen ist, der als Trägheitsabscheider mit einer Vielzahl parallel zueinander ausgerichteter, einander überlappender Prallbleche bzw. Umlenklamellen ausgebildet ist.

12. Entsorgungsfahrzeug nach einem der Ansprüche 1 bis 11, **dadurch gekennzeichnet**, daß als Mittel zum Ausleiten und Abführen des aufgenommen Gutes ein an der hintere Stirnseite des Aufnahmebehälters (1) in tiefster Stellung angeordneter Entleerungsdom (1.1) mit einem Entleerungsstutzen vorgesehen ist, wobei der Entleerungsstutzen mit einem Schieber absperrbar ist, und daß der Boden des Aufnahmebehälters (1) zumindest im Bereich des Entleerungsdoms (1.1) eine das aufgenommene Gut fluidisierende Belüftungseinrichtung aufweist, die über eine Druckleitung (22) an die Druckseite des Saug-/Druck-Aggregates (12) anschließbar ist.

13. Entsorgungsfahrzeug nach Anspruch 12, **dadurch gekennzeichnet**, daß der Entleerungsdom (1.1) als Anschlußstutzen für eine als pneumatische Förderleitung ausgebildete Entleerungsleitung (23) und die über die Druckleitung (22) mit dem Saug-/Druck-Aggregat (12) verbundene Belüftungseinrichtung als Sendestation für diese pneumatische Fördereinrichtung ausgebildet sind.

14. Entsorgungsfahrzeug nach Anspruch 12 oder 13, **dadurch gekennzeichnet**, daß der Entleerungsdom (1.1) durch eine eingesetzte Platte (1.3) in eine Druckkammer (1.2) mit dem Anschluß der Druckleitung (22) und eine Wirbelkammer mit dem Anschluß der Förderleitung (23) unterteilt ist, wobei die Platte (1.3) mindestens eine mit einem Siebgewebe (1.31) und/oder einem Lochblech (1.32) abgedeckte Überströmöffnung aufweist.

15. Entsorgungsfahrzeug nach Anspruch 14, **dadurch gekennzeichnet**, daß die eingesetzte Platte (1.3) mit über den Umfang verteilten Bajonettstiften (1.33) versehen ist, die mit einem Exzenterhebel (1.34) anspannbar sind, und die in am Grundkörper (1.1) vorgesehene Nasen (1.12) einführbar und dort festsetzbar sind, wobei vorzugsweise die eingesetzte Platte (1.3) mit einer umlaufenden Dichtung (1.34) aus einem elastischen Material versehen ist.

16. Entsorgungsfahrzeug nach Anspruch 14 oder 15, **dadurch gekennzeichnet**, daß die Überströmöffnung als in die Platte (1.3) eingesetzter Rohrbogen (1.4) ausgebildet ist, dessen Austrittsachse in die Öffnung der Förderleitung (23) weist.

17. Entsorgungsfahrzeug nach Anspruch 16, **dadurch gekennzeichnet**, daß das offene Ende des Rohrbogens (1.4) mit einer bis in den Eintrittsquerschnitt der Förderleitung (23) reichenden Injektordüse versehen ist.

18. Entsorgungsfahrzeug nach einem der Ansprüche 12 bis 17, **dadurch gekennzeichnet**, daß der Entleerungsdom (1.1) einen die Druckkammer verschließenden Druckkammerdeckel (1.2) aufweist, der vorzugsweise mit Schnellverschlüssen (1.15; 1.17) am Entleerungsdom befestigt ist.

19. Entsorgungsfahrzeug nach einem der Ansprüche 1 bis 18, **dadurch gekennzeichnet**, daß die Mittel zum Einleiten eines Additivs in den Aufnahmebehälter (1) gebildet sind von einem an die Auslaßleitung (13) des Saug-Druck-Aggregats (12) über eine Druckleitung (14) mit Absperrventil (15) angeschlossenen, in dem Aufnahmebehälter (1) angeordneten Verteilsystem (17), wobei diesem Verteilsystem (17) ein mit der Auslaßleitung (13) verbundener Zusatzmittelbehälter (16) vorgeschaltet ist.

20. Entsorgungsfahrzeug nach Anspruch 19, **dadurch gekennzeichnet**, daß das Verteilsystem gebildet ist von einer in dem Aufnahmebehälter (1) vorgesehen Verteilleitung (17) mit mindestens einem Ausblas.

21. Entsorgungsfahrzeug nach einem der Ansprüche 1 bis 20, **dadurch gekennzeichnet**, daß in die Saugleitung (3) eine Benetzungstrecke eingefügt ist, die mit einer am Entsorgungsfahrzeug vorgesehenen Vorratskammer für ein Benetzungsmittel über eine druckregulierte Förderpumpe verbunden ist.

22. Entsorgungsfahrzeug nach einem der Ansprüche 1 bis 21, **dadurch gekennzeichnet**, daß ein den Unterdruck im Aufnahmebehälter (1) bzw. vor den Abscheidern (7, 8) aufnehmendes Vakuum-/Druck-Meßgerät (29) mit Grenzkontakten vorgesehen ist, wobei die Grenzkontakte mit einem die Drehzahl des Antriebsmotors (12.1) des Saug-/Druck-Aggregates (12) beeinflussenden Regler (30; 30.1) zusammenwirkt.

23. Entsorgungsfahrzeug nach einem der Ansprüche 1 bis 22, **dadurch gekennzeichnet**, daß sowohl dem Ansaug als auch dem Ausblas des Saug-/ Druck-Aggregat (12) je ein Schalldämpfer (11.1, 12.1) vor- bzw. nachgeschaltet ist.

24. Entsorgungsfahrzeug nach einem der Ansprüche 1 bis 23, **dadurch gekennzeichnet**, daß der Aufnahmebehälter (1) mit einer Einrichtung zur Füllstandüberwachung versehen ist.

25. Entsorgungsfahrzeug nach Anspruch 24, **dadurch gekennzeichnet**, daß zur Füllstandüberwachung ein elektro-mechanischer Kraftwandler vorgesehen ist, über den der Aufnahmebehälter (1) aufgehängt bzw. aufgeständert ist.

26. Entsorgungsfahrzeug nach Anspruch 24, **dadurch gekennzeichnet**, daß zur Füllstandüberwachung mindestens ein Lichtschrankengeber und Lichtschrankenempfänger vorzugsweise mehrere Geber-/Empfängerpaare in verschiedenen Höhen im Inneren des Aufnahmebehälters (1) vorgesehen sind.

27. Entsorgungsfahrzeug nach Anspruch 24, **dadurch gekennzeichnet**, daß zur Füllstandsüberwachung am Aufnahmebehälter (1) eine Gamma-Strahlungsquelle angeordnet und gegenüberliegend ein Detektor vorgesehen ist.

28. Entsorgungsfahrzeug nach Anspruch 24, **dadurch gekennzeichnet**, daß zur Füllstandsüberwachung vorzugsweise im Scheitel des Aufnahmebehälters (1) ein Ultraschallgeber und ein Ultraschallaufnehmer vorgesehen sind.

## Claims

1. Disposal vehicle including a chassis and a cab, on the chassis being provided at least one container (1) and a suction/pressure aggregate (12) and the container (1) being provided with a suction hose (3) introduced into said container (1) and being connected via a vacuum pipeline (5) to the motorized suction/pressure aggregate (12), with a separator being incorporated in the vacuum pipeline (5), the vacuum pipeline being divided into two pipeline branches designed to be shut off independently from each other by means of valves and having incorporated therein separators, the first of said pipeline branches being formed as a cyclone (8) for droplets or other flow materials and the other one being designed as a cleanable filter (7) for dust and other pourable materials, characterized in that the suction/pressure aggregate (12) is provided with a blow-out pipeline and can be returned via the pumped air, the container (1) having pneumatic means for discharging and draining the sucked media and means for introducing additives into the container (1), the returned air being usable both for discharging and draining of the sucked media and for introducing these additives.

2. Disposal vehicle as claimed in Claim 1, characterized in that the suction hose (3) introduced into the container (1) via a dome (2) has a 90° angle orientated essentially coaxially relative to the axis of the dome (2) and having an apex with a wear protection, preferably in the form of a readily exchangeable wear plate or a wear shell.

3. Disposal vehicle as claimed in Claim 2, characterized in that the wear plate or shell is arranged at an angle of essentially 45° relative to the flow-in direction and is provided with a wear resistant surface.

4. Disposal vehicle as claimed in Claim 2, characterized in that the wear protection is formed as a chamber having an angle of essentially 45° relative to the flow-in direction and being open towards the front, the cavity of the chamber being adapted to receive sucked-up material.

5. Disposal vehicle as claimed in any one of Claims 1 to 4, characterized in that the container (1) is provided in the area of the suction line inlet or of the inlet dome (2) with means preventing cone formation and formed as baffles arranged in the flow-in area.

6. Disposal vehicle as claimed in any one of Claims 1 to 4, characterized in that the container (1) is provided in the area of the suction line inlet or of the inlet dome (2) with means preventing cone formation, which are formed as bottom ventilation intended for the bottom area or as vibrators.

7. Disposal vehicle as claimed in any one of Claims 1 to 6, characterized in that the submersion pipe of the cyclone (8) formed as a droplet separator is extended by a perforated pipe and is taken to a point close to the dust outlet.

8. Disposal vehicle as claimed in Claim 7, characterized in that in the submersion pipe of the cyclone (8) a float valve is provided, which includes an upper conical nipple or a lower sealing ball, a floating body extending into the discharge container of the cyclone (8) and a sealing seat located in the area of the transition to the perforated pipe and interacting with the conical nipple or the sealing ball.

9. Disposal vehicle as claimed in Claims 7 or 8, characterized in that a safety filter (10) located downstream of the cyclone (8) is provided with an anti-foaming agent as foam inhibitor.

10. Disposal vehicle as claimed in any one of Claims 1 to 9, characterized in that the cyclone (8) is provided with flushing means.

11. Disposal vehicle as claimed in any one of Claims 1 to 10, characterized in that a pre-separator protecting the vacuum pipeline (5) in the area of the vacuum dome and relieving the separators (7, 8) arranged in the course of the vacuum pipeline (5) is provided, said pre-separator being formed as an inertia separator having a multitude of baffles or reversing laminae overlapping each other and being arranged parallel to each other.

12. Disposal vehicle as claimed in any one of Claims 1 to 11, characterized in that a discharge dome (1.1) with a discharge socket, which is arranged in a lowermost position at the rear face of the container (1), is provided as means for discharging or draining the received materials, the discharge socket being designed to be locked by a slide valve, and in that the bottom of the container (1) has ventilation means fluidizing the received material at least in the area of the discharge dome (1.1), said ventilation means being designed to be connected via a pressure line (22) to the pressure side of the suction/pressure aggregate (12).

13. Disposal vehicle as claimed in Claim 12, characterized in that the discharge dome (1.1) has the form of a connection socket for a discharge pipeline (23) formed as a pneumatic delivery pipe and the ventilation means connected via the pressure line (22) with the suction/pressure aggregate (12) has the form of a transmitter station for these pneumatic delivery means.

14. Disposal vehicle as claimed in Claim 12 or 13, characterized in that the discharge dome (1.1) is divided by an inserted plate (1.3) into a pressure chamber (1.2) having therein the pressure line (22) connection and into a vortex chamber having therein the delivery line (23) connection, the plate (1.3) having at least one overflow opening covered by the sieve fabric (1.31) and/or by a perforated metal sheet (1.32).

15. Disposal vehicle as claimed in Claim 14, characterized in that the inserted plate (1.3) is provided with bayonet pins (1.33) distributed over its circumference, which are designed to be tensioned by means of a cam lever (1.34) and which can be introduced into noses (1.12) provided on the base body (1.1) and can be fixed therein, the introduced plate (1.3) preferably being provided with a circumferential seal (1.34) of an elastic material.

16. Disposal vehicle as claimed in Claim 14 or 15, characterized in that the overflow opening has the form of a pipe elbow (1.4) inserted into the plate (1.3), the exit axis of said elbow pointing into the opening of the delivery pipe (23).

17. Disposal vehicle as claimed in Claim 16, characterized in that the open end of the pipe elbow (1.4) is provided with an injector nozzle extending into the inlet cross-section of the delivery pipe (23).

18. Disposal vehicle as claimed in any one of Claims 12 to 17, characterized in that the discharge dome (1.1) has a pressure chamber cover (1.2) closing the pressure chamber, said cover being preferably fixed to the discharge dome by means of quick acting closures (1.15; 1.17).

19. Disposal vehicle as claimed in any one of Claims 1 to 18, characterized in that the means for introducing an additive into the container (1) are formed by a distribution system (17) connected to the outlet pipeline (13) of the suction/pressure aggregate (12) via a pressure line (14) with a shut-off valve (15) and arranged in the container (1), with a reagent container (16) being connected to the outlet pipeline (13) in an upstream direction of said distribution system (17).

20. Disposal vehicle as claimed in Claim 19, characterized in that the distribution system is formed by a distribution pipeline (17) with at least one blow end, said distribution pipeline being provided in the container (1).

21. Disposal vehicle as claimed in any one of Claims 1 to 20, characterized in that a wetting section is incorporated in the suction line (3), which is connected via a pressure controlled delivery pump with a storage chamber for a wetting agent provided on the disposal vehicle.

22. Disposal vehicle as claimed in any one of Claims 1 to 21, characterized in that a vacuum/pressure gauge (29) with limit contacts is provided, which detects the vacuum in the container (1) or in front of the separators (7, 8), the limit contacts interacting with a regulator (30; 30.1) controlling the rotational speed of the drive motor (12.1) of the suction/pressure aggregate (12).

23. Disposal vehicle as claimed in any one of Claims 1 to 22, characterized in that both the suction end and the blow end of the suction/pressure aggregate (12) have connected thereto a silencer upstream or downstream.

24. Disposal vehicle as claimed in any one of Claims 1 to 23, characterized in that the container (1) is provided with level monitoring means.

25. Disposal vehicle as claimed in Claim 24, characterized in that an electro-mechanical transducer is provided for level monitoring, above which the container (1) is either suspended or erected.

26. Disposal vehicle as claimed in Claim 24, characterized in that for level monitoring at least one photoelectric barrier transmitter and photoelectric barrier receiver, preferably several transmitter/receiver pairs at various levels, are provided at the inside of the container (1).

27. Disposal vehicle as claimed in Claim 24, characterized in that for level monitoring there is provided on the container (1) a gamma radiation source and opposite to that a detector.

28. Disposal vehicle as claimed in Claim 24, characterized in that for level monitoring, an ultrasonic signal transmitter and an ultrasonic signal receiver are provided preferably at the apex of the container (1).

## Revendications

1. Véhicule pour l'évacuation de déchets, équipé d'un châssis et d'une cabine, au moins un réceptacle (1) et un appareil de pression/aspiration (12) étant montés sur le châssis et ce réceptacle (1) étant muni d'un tuyau flexible d'aspiration (3) introduit dans celui-ci et étant raccordé à l'appareil de pression/aspiration (12) qui est entraîné par moteur par l'intermédiaire d'une conduite de vide (5), un séparateur étant intercalé dans la conduite de vide (5), la conduite de vide étant divisée en deux embranchements contenant des séparateurs, au moyen de vannes intercalées indépendamment l'une de l'autre, embranchements dont le premier est formé en tant que cyclone (8) pour les gouttelettes et autres substances coulantes et l'autre embranchement étant formé comme filtre (7) nettoyable pour la poussière et autres substances de ruissellement, caractérisé en ce que l'appareil d'aspiration/pression (12) est muni d'une conduite de purge par laquelle l'air en circulation est recyclé, le réceptacle (1) présentant des moyens pneumatiques pour faire dévier et évacuer les agents et substances aspirés pour l'introduction d'additifs dans le réceptacle (1), moyennant quoi l'air recyclé peut être mis en oeuvre aussi bien pour la déviation que pour l'évacuation des substances aspirées que pour l'introduction de ces additifs.

2. Véhicule pour l'évacuation des déchets selon la revendication 1, caractérisé en ce que le tuyau flexible d'aspiration (3) introduit par l'intermédiaire d'un dôme (2) dans le réceptacle (1) présente un coude à 90° qui est essentiellement dirigé coaxialement par rapport à l'axe du dôme (2) et dans le sommet duquel est agencée une protection anti-usure, de préférence sous forme d'une plaque anti-usure ou d'une semi-coque anti-usure facilement interchangeable.

3. Véhicule pour l'évacuation des déchets selon la revendication 2, caractérisé en ce que la plaque d'usure ou la semi-coque d'usure est essentiellement orientée à 45° par rapport à la direction d'introduction du courant et en ce qu'elle est munie d'une surface résistant à l'usure.

4. Véhicule pour l'évacuation des déchets selon la revendication 2, caractérisé en ce que la protection anti-usure est conçue sous la forme d'une chambre ouverte vers l'avant, essentiellement orientée à 45° par rapport au sens d'introduction du courant, ce en quoi dans l'espace creux de la chambre la matière évacuée par aspiration peut être déposée.

5. Dispositif pour l'évacuation des déchets selon l'une des revendications 1 à 4, caractérisé en ce que dans la zone d'entrée de la conduite d'aspiration ou du dôme d'entrée (2) le réceptacle est muni de moyens sous forme de tôles déflectrices ou de chicanes agencées dans la partie entrée de courant, se raccordant à une partie sphérique.

6. Véhicule pour l'évacuation des déchets selon l'une des revendications 1 à 4, caractérisé en ce que le réceptacle (1) au niveau de l'entrée de la conduite d'aspiration ou du dôme d'entrée (2) est muni de moyens reliant une sphère, et qui sont conçus comme aération de plancher ou comme vibrateurs et sont prévus au niveau du plancher.

7. Véhicule pour l'évacuation des déchets selon l'une des revendications 1 à 6, caractérisé en ce que le tube d'immersion du cyclone (8) formé comme séparateur de gouttelettes est prolongé par une crépine tubulaire et qu'il est guidé jusqu'à proximité de l'évacuation des poussières.

8. Dispositif pour l'évacuation des déchets selon la revendication 7, caractérisé en ce qu'il est prévu une vanne à flotteurs dans le tube d'immersion du cyclone (8) avec une bille d'étanchéité supérieure ou une bille d'étanchéité inférieure, un flotteur s'étendant dans le réservoir d'évacuation du cyclone (8) et un siège d'étanchéité coopérant avec le cône ou la bille d'étanchéité agencé vers la crépine tubulaire.

9. Véhicule pour l'évacuation des déchets selon la revendication 7 ou 8, caractérisé en ce qu'un filtre de sécurité (10) est monté en aval du cyclone (8) avec un moyen anti-mousse pour freiner la formation de mousse.

10. Véhicule pour l'évacuation des déchets selon les revendications 1 à 9, caractérisé en ce que le cyclone (8) est doté d'un dispositif de rinçage.

11. Dispositif pour l'évacuation des déchets selon l'une des revendications 1 à 10, caractérisé en ce qu'au niveau du dôme de vide, est prévu un pré-séparateur déchargeant le séparateur (7 ; 8) agencé à la suite de et protégeant la conduite de vide (5), pré-séparateur qui est conçu en tant que séparateur par inertie avec plusieurs lamelles de dérivation ou chicanes superposées dirigées parallèlement entre elles.

12. Véhicule pour l'évacuation des déchets selon l'une des revendications 1 à 11, caractérisé en ce que comme moyen pour faire dévier et évacuer les produits chargés, il est prévu un dôme d'évacuation (1.1) agencé sur le côté frontal arrière du réceptacle (1) dans la position la plus basse avec une tubulure d'évacuation, la tubulure d'évacuation pouvant être obturée par une vanne à coulisseau ou vanne-robinet, et en ce que le plancher du réceptacle (1) présente, au moins au niveau du dôme d'évacuation (1.1), un dispositif d'aération fluidisant les produits chargés, dispositif qui peut être raccordé par une conduite de pression (22) au côté pression de l'appareil aspiration/pression (12).

13. Véhicule pour l'évacuation des déchets selon la revendication 12, caractérisé en ce que le dôme d'évacuation (1.1) conçu comme tubulure de raccordement pour une conduite d'évacuation (23) conçue comme conduite de décharge pneumatique et en ce que le dispositif d'aération raccordé à l'appareil d'aspiration/pression (12) par l'intermédiaire de la conduite de pression (22) est conçu comme poste d'envoi pour ce dispositif de décharge pneumatique.

14. Véhicule pour l'évacuation des déchets selon la revendication 12 ou 13, caractérisé en ce que le dôme d'évacuation (1.1) est divisé par une plaque intercalée (1.3) dans une chambre de pression (1.2) avec le raccordement de la conduite de pression (22) et une chambre de turbulence avec le raccordement de la conduite de décharge (23), la plaque (1.3) présentant au moins une ouverture d'excédent de débit revêtue d'un tissu de crépine (1.31) et/ou d'une tôle perforée (1.32).

15. Véhicule pour l'évacuation des déchets selon la revendication 14, caractérisé en ce que la plaque intercalée (1.3) est munie d'axes à baïonnette (1.33) répartis sur la périphérie et qui peuvent être tendus à l'aide d'un levier excentrique (1.34) et introduits sur un talon (1.12) prévu sur le corps de base (1.1) pour y être fixés, la plaque intercalée étant de préférence munie d'un joint d'étanchéité périphérique (1.34) en un matériau élastique.

16. Véhicule pour l'évacuation des déchets selon la revendication 14 ou 15, caractérisé en ce que l'ouverture de trop-plein est conçue sous forme de coude tubulaire (1.4) monté sur la plaque (1.3) et dont l'axe de sortie est orienté dans l'ouverture de la conduite de décharge (23).

17. Véhicule pour l'évacuation des déchets selon la revendication 16, caractérisé en ce que l'extrémité ouverte du coude tubulaire (1.4) est munie d'une tuyère d'injection s'étendant jusque dans la section d'entrée de la conduite de décharge (23).

18. Véhicule pour l'évacuation des déchets selon l'une des revendications 12 à 17, caractérisé en ce que le dôme d'évacuation (1.1) présente un couvercle de chambre de pression (1.2) fermant la chambre de pression, couvercle qui est fixé de préférence à l'aide de systèmes de fermeture rapide (1.15 ; 1.17) au dôme d'évacuation.

19. Véhicule pour l'évacuation des déchets selon l'une des revendications 1 à 18, caractérisé en ce que les moyens pour l'introduction d'un additif dans le réceptacle (1) sont constitués par un système de distribution (17) agencé dans le réceptacle (1), raccordé à la conduite d'évacuation (13) de l'appareil aspiration/pression (12) par une conduite de pression (14) avec la vanne d'arrêt (15), un réservoir supplémentaire (16) raccordé à la conduite d'évacuation (13) étant monté en amont de ce système de distribution (17).

20. Véhicule pour l'évacuation des déchets selon la revendication 19, caractérisé en ce que le système de distribution est constitué par une conduite de distribution (17) montée dans le réceptacle (1) avec au moins une purge.

21. Véhicule pour l'évacuation des déchets selon l'une des revendications 1 à 20, caractérisé en ce qu'un tronçon d'humidification est encastré dans la conduite d'aspiration (3), qui est raccordée avec une chambre de stockage prévue sur le véhicule d'évacuation des déchets, chambre de stockage des produits d'humidification ou de mouillage raccordée par l'intermédiaire d'une pompe de décharge régulée en pression.

22. Dispositif pour l'évacuation des déchets selon l'une des revendications 1 à 21, caractérisé en ce qu'il est prévu un appareil de mesure de vide/pression (29) muni de contacts de limite, captant la sous-pression dans le réceptacle (1) ou en amont des séparateurs (7 ; 8), les contacts de limite coopérant avec un régulateur (30 ; 30.1) agissant sur le nombre de tours du moteur d'entraînement (12.1) de l'appareil aspiration/pression (12).

23. Véhicule pour l'évacuation des déchets selon l'une des revendications 1 à 22, caractérisé en ce qu'un amortisseur sonore (11.1 ; 12.1) est prévu respectivement aussi bien en amont qu'en aval de l'aspiration et de la purge de l'appareil d'aspiration/pression (12).

24. Appareil pour l'évacuation des déchets selon l'une des revendications 1 à 23, caractérisé en ce que le réceptacle (1) est muni d'un dispositif pour le contrôle de niveau.

25. Dispositif pour l'évacuation des déchets selon la revendication 24, caractérisé en ce que pour le contrôle du niveau, il est prévu un convertisseur électromécanique par lequel est suspendu ou accroché le réceptacle (1).

26. Véhicule pour l'évacuation des déchets selon la revendication 24, caractérisé en ce que pour le contrôle de niveau, sont prévus au moins un indicateur ou récepteur à cellule photoélectrique, de préférence plusieurs couples émetteurs/récepteurs à différentes hauteurs à l'intérieur du réceptacle (1).

27. Véhicule pour l'évacuation des déchets selon la revendication 24, caractérisé en ce que pour le contrôle sur le réceptacle (1) est agencée une source de rayonnement gamma et un détecteur est prévu en regard de celle-ci.

28. Véhicule pour l'évacuation des déchets selon la revendication 24, caractérisé en ce qu'un émetteur à ultrasons et un récepteur à ultrasons pour le contrôle de niveau sont de préférence prévus au sommet du réceptacle (1).
